Europäisches Patentamt

European Patent Office

Office européen des brevets

(11) Veröffentlichungsnummer: **0 268 806**
A2

(12) **EUROPÄISCHE PATENTANMELDUNG**

(21) Anmeldenummer: 87115049.6

(22) Anmeldetag: 15.10.87

(51) Int. Cl.⁴: **C08G 18/48** , C08G 18/66 , C08G 18/10 , C08G 18/83 , D21H 3/54

(30) Priorität: 28.11.86 DE 3640752

(43) Veröffentlichungstag der Anmeldung:
01.06.88 Patentblatt 88/22

(84) Benannte Vertragsstaaten:
AT BE CH DE ES FR GB GR IT LI LU NL SE

(71) Anmelder: Akzo N.V.
Postbus 186 Velperweg 76
NL-6800 LS Arnhem(NL)

(72) Erfinder: Gorzynski, Marek, Dr.
Berliner Strasse 156
D-1000 Berlin 31(DE)
Erfinder: Schürmann, Horst
Grüner Weg 105
D-5160 Düren(DE)

(74) Vertreter: Fett, Günter
Akzo GmbH Kasinostrasse 19-23
D-5600 Wuppertal 1(DE)

(54) **Anionische Polyurethane.**

(57) Anionische Polyurethane werden hergestellt, indem man eine aliphatische Dihydroxyverbindung, die einen aliphatischen Substituenten mit mindestens 10 Kohlenstoffatomen aufweist, mit einem Polyisocyanat zu einem NCO-Endgruppen aufweisenden Voraddukt umsetzt und das Voraddukt zwecks Kettenverlängerung mit einem aliphatischen Diol umsetzt, das eine zur Salzbildung befähigte Säuregruppe trägt und diese Säuregruppe völlig oder teilweise in ein Salz überführt. Bei der Herstellung des Polyurethans werden mindestens eine OH-Gruppe aufweisende Polyätherverbindungen, insbesondere Polyalkylenglykole wie Polyäthylenglykol mitverwendet. Die erhaltenen anionischen Polyurethane sind besonders als Leimungsmittel für Papier geeignet und lassen eine Leimung auch im sauren pH-Gebiet zu; das Leimungsmittel ist ferner weniger empfindlich gegenüber mehrwertigen Kationen wie Calcium und Aluminiumionen.

EP 0 268 806 A2

## Anionische Polyurethane

Die Erfindung betrifft anionische Polyurethane, Verfahren zu deren Herstellung sowie deren Verwendung als Leimungsmittel bei der Papierherstellung.

Polyurethane mit Ionencharakter, zu denen auch die anionischen Polyurethane zu zählen sind, sind bereits seit langem bekannt. Man kann bei der Herstellung derartiger Polyurethane Ausgangsstoffe verwenden, die zur Salzbildung befähigte Gruppen oder die bereits direkt Salzgruppen enthalten. Diese salzartigen oder zur Salzbildung befähigten Gruppen können sowohl beim Kettenverlängerer als auch beim Polyisocyanat oder bei der in der ersten Stufe der Herstellung eingesetzten Polyhydroxyverbindung z.B. einem Polyester vorhanden sein.

Anionische Polyurethane werden hergestellt, in dem man bei dem Aufbau der Polyurethane solche Verbindung mitverwendet, daß das fertige Polyurethan eine Säuregruppe enthält, z.B. die Carboxylgruppe. Durch Neutralisation mit einer entsprechenden Base wird das Polyurethan in ein Salz übergeführt, das Polyurethanmolekül liegt dann als Anion vor. Es ist natürlich auch möglich, bereits von vornherein entsprechende, als Salz vorliegende Ausgangsstoffe bei der Synthese von anionischen Polyurethanen einzusetzen. Als anionische Polyurethane im Sinne der Erfindung sind auch solche Polyurethane zu verstehen, bei denen das Polyurethanmolekül neben dem anionischen Teil auch einen kationischen Anteil aufweist, d.h. mehr oder weniger amphoteren Charakter besitzt.

Es sind bereits zahlreiche Verfahren zur Herstellung von anionischen Polyurethanen bekannt. So wird beispielsweise in der DE-OS 1 495 847 ein Verfahren beschrieben, bei dem höhermolekulare Polyhydroxyverbindungen wie Polyester, Polyacetale, Polyäther usw. zum Umsatz mit Polyisocyanaten gelangen und wobei eine Verbindung mit mindestens einem mit Isocyanatgruppen reagierenden Wasserstoffatom und mindestens einer salzartigen oder zur Salzbildung befähigten Gruppe mitverwendet wird. Dabei sind unter salzartiger Gruppe Gruppierungen zu verstehen, die sich sowohl von Sulfonsäuren, als auch von Carbonsäuren und Säuren des Phosphors ableiten. Es werden zahlreiche Verbindungen zitiert wie z.B. Milchsäure, Weinsäure, 4,6-Dihydroxyisophthalsäure, Harnsäure, Barbitursäure, Oxalsäure, Malonsäure, Diglycolsäure, Aminosulfonsäuren, Phosphinsäuren, Phosphonigsäuren, Phosphonsäuren und Phosphorsäuren.

Die dort beschriebenen Polyurethane können zu Filmen und Folien verarbeitet werden und dienen zum Beschichten und Imprägnieren von gewebten und nichtgewebten Textilien, Leder, Papier u.dgl. sowie zur antistatischen und knitterfreien Ausrüstung. Als Leimungsmittel für Papier sind diese Polyurethane weniger geeignet, da sie zu hohen Cobb-Werten und niedrigen Leimungsgraden führen.

In der DE-OS 1 720 639 werden ähnlich aufgebaute anionische Polyurethane beschrieben, die sich von den vorstehend erwähnten Polyurethanen durch die Verwendung von ganz speziellen Diaminocarbonsäuren als salzbildenden Verbindungen unterscheiden. Hier werden Diaminocarbonsäuren verwendet, bei denen die Carbonsäuregruppe über eine Amidbindung mit der Kette verbunden ist, welche die beiden Aminogruppen trägt.

Auch diese anionischen Polyurethane sind als Leimungsmittel für Papier wenig geeignet.

In der DE-PS 24 57 972 werden anionische Polyurethane beschrieben, die erhalten werden durch Umsetzung einer aliphatischen Dihydroxyverbindung, die einen aliphatischen Substituenten mit mindestens 10 Kohlenstoffatomen aufweist, mit einem Polyisocyanat zu einem NCO-Endgruppen aufweisenden Voraddukt, Kettenverlängerung des erhaltenen Voraddukts mit einem aliphatischen Diol, das eine zur Salzbildung befähigte Säuregruppe trägt und völlige oder teilweise Überführung der Säuregruppe durch Umsetzung mit einer Base in ein Salz oder durch Kettenverlängerung des Voraddukts mit einem aliphatischen Diol, das bereits eine entsprechende Salzgruppe trägt. Es ist auch möglich, das NCO-Gruppen aufweisende Voraddukt zunächst mit einer aliphatischen Trihydroxyverbindung in einem molaren Verhältnis von etwa 1 : 1 umzusetzen und sodann mit einem cyclischen Anhydrid einer Dicarbonsäure umzusetzen und schließlich die dabei entstandene Säuregruppe durch Umsetzung mit einer Base ganz oder teilweise in ein Salz zu überführen.

Diese anionischen Polyurethane sind sehr geeignet für die Leimung von Papier; sie können sowohl für die Oberflächenleimung als auch bei der Masseleimung eingesetzt werden.

Es hat sich aber gezeigt, daß diese anionischen Polyurethane gegenüber mehrwertigen Kationen, wie sie vorhanden sind, wenn man z.B. hartes Wasser verarbeitet oder enzymatisch abgebaute Stärke einsetzt, empfindlich sind. In Anwesenheit solcher Ionen kann es zu Schwierigkeiten bei der Leimung kommen. Als störende mehrwertige Ionen sind hier insbesondere Calcium-und Aluminiumionen zu nennen. Auch weisen diese anionischen Polyurethane eine gewisse Empfindlichkeit gegenüber Säuren auf, so daß es insbesondere beim Leimen in Masse ab pH 6,5 zu Ausfällungen des anionischen Polyurethans kommen kann, so daß die Leimungswirksamkeit herabgesetzt wird.

Obwohl bereits zahlreiche Polyurethane anionischer Struktur bekannt sind, besteht somit noch ein Bedürfnis nach anionischen Polyurethanen mit verbesserten Eigenschaften sowie nach entsprechenden Herstellungsverfahren, insbesondere aber nach anionischen Polyurethanen, die als Leimungsmittel für Papier für die verschiedensten Zwecke geeignet sind.

Aufgabe der Erfindung ist es deshalb, anionische Polyurethane zur Verfügung zu stellen, welche bei der Leimung von Papier zu hohen Leimungsgraden und guten Cobb-Werten führen, die weniger empfindlich sind gegenüber Elektrolyten, insbesondere mehrwertigen Ionen wie Calcium-und Aluminiumionen und die insbesondere auch ohne Komplikationen im sauren Bereich bei der Leimung eingesetzt werden können, d.h. z.B. in dem wichtigen Bereich von pH 4,5 - 5, aber auch im neutralen und im basischen Bereich.

Diese Aufgabe wird gelöst durch ein Verfahren zur Her stellung von anionischen Polyurethanen durch Umsetzung einer aliphatischen Dihydroxyverbindung, die einen aliphatischen Substituenten mit mindestens 10 Kohlenstoffatomen aufweist, mit einem Polyisocyanat zu einem NCO-Endgruppen aufweisenden Voraddukt, Kettenverlängerung des erhaltenen Voraddukts mit einem aliphatischen Diol, das eine zur Salzbildung befähigte Säuregruppe trägt und völlige oder teilweise Überführung der Säuregruppe durch Umsetzung mit einer Base in ein Salz oder durch Kettenverlängerung des Voraddukts mit einem entsprechenden aliphatischen Diol, das bereits eine entsprechende Salzgruppe trägt, das dadurch gekennzeichnet ist, daß man zum Aufbau des anionischen Polyurethans eine mindestens eine OH-Gruppe aufweisende Polyätherverbindung mitverwendet.

Diese Aufgabe wird ferner gelöst durch ein Verfahren zur Herstellung von anionischen Polyurethanen durch Umsetzung einer aliphatischen Dihydroxyverbindung, die einen aliphatischen Substituenten mit mindestens 10 Kohlenstoffatomen aufweist, mit einem Polyisocyanat zu einem NCO-Endgruppen aufweisenden Voraddukt, Umsetzung des erhaltenen Voraddukts mit einer aliphatischen Trihydroxyverbindung in einem molaren Verhältnis von etwa 1 : 1 und weiterer Umsetzung mit einem cyclischen Anhydrid einer Dicarbonsäure und anschließender ganzer oder teilweiser Überführung der dabei entstandenen Säuregruppe durch Umsetzung mit einer Base in ein Salz, das dadurch gekennzeichnet ist, daß man zum Aufbau des anionischen Polyurethans eine mindestens eine OH-Gruppe aufweisende Polyätherverbindung mitverwendet.

Vorzugsweise werden Polyätherverbindungen mit zwei OH-Gruppen, insbesondere zwei endständigen OH-Gruppen mitverwendet, wobei Polyalkylenglykole besonders vorteilhaft sind. Sehr geeignet als Polyalkylenglykol ist Polyäthylenglykol.

Die Polyätherverbindung wird vorteilhaft in Mengen von 5 bis 50 Gew.-% mitverwendet, wobei sich diese Prozentangabe auf das Gesamtgewicht der reagierenden Ausgangsverbindungen bezieht. Besonders vorteilhaft ist, wenn man 25 bis 30 Gew.-% der Polyätherverbindung mitverwendet.

Sehr geeignet im Rahmen der Erfindung sind als Polyätherverbindungen Polyalkylenglykole mit einem Molekulargewicht von 200 bis 6 000, insbesondere von 1000 bis 3 000.

Die Polyätherverbindung wird vorteilhafterweise zur Reaktion mit dem Voraddukt mitverwendet. Hier sind Polyätherverbindungen mit zwei OH-Gruppen, insbesondere mit zwei endständigen OH-Gruppen wie Polyalkylenglykole besonders geeignet.

Die Umsetzung kann in einem Lösungsmittel durchgeführt werden. Als Lösungsmittel ist Aceton besonders geeignet.

Eine vorteilhafte Ausführungsform des erfindungsgemäßen Verfahrens, wie es in einem der Ansprüche 1 oder 3 bis 11 beschrieben wird, besteht in einem Verfahren, das dadurch gekennzeichnet ist, daß man zur Kettenverlängerung das aliphatische Diol, welches eine zur Salzbildung befähigte Säuregruppe bzw. bereits eine entsprechende Salzgruppe trägt, im Gemisch mit einem aliphatischen Diol, das tertiären Stickstoff enthält, verwendet, wobei das molare Ver hältnis aliphatisches Diol mit tertiärem Stickstoff zu aliphatischem Diol mit Säure-bzw. Salzgruppe maximal 1 : 1 ist.

Vorteilhafterweise wird als aliphatisches Diol mit tertiärem Stickstoff N-Methyldiäthanolamin verwendet.

Gegenstand der Erfindung sind ferner anionische Polyurethane, wie sie nach einem der vorstehend beschriebenen Verfahren erhältlich sind.

Ein weiterer Gegenstand der Erfindung ist die Verwendung dieser anionischen Polyurethane als Leimungsmittel für Papier.

Bei der Umsetzung in Lösungsmitteln wird zweckmäßiger Weise mit Konzentrationen von 10 bis 50, vorzugsweise 25 bis 50% gearbeitet, wobei unter Konzentration die Gewichtsmenge Ausgangssubstanzen pro Gewichtsmenge Lösungsmittel und Ausgangssubstanzen zu verstehen ist.

Im Rahmen der Erfindung sind besonders geeignet aliphatische Dihydroxylverbindungen, die einen aliphatischen Substituenten mit mindestens 16 Kohlenstoffatomen aufweisen. Unter einer aliphatischen Dihydroxylverbindung im Sinne dieser Erfindung sind nichtpolymere aliphatische Glykole zu verstehen, d.h.

niedermolekulare organische Verbindungen, die zwei Hydroxylgruppen in 1,2-oder 1,3-oder in einer sonstigen Stellung, beispielsweise α,ω-Stellung aufweisen. Vorzugsweise werden substituierte aliphatische Dihydroxylverbindungen verwendet, bei denen die beiden Hydroxylgruppen durch maximal 7 Atome in der aliphatischen Kette miteinander verbunden sind.

Der aliphatische Substituent, den die aliphatische Dihydroxylverbindung aufweisen muß, kann sich an einem Kohlenstoffatom befinden, das eine der beiden Hydroxylgruppen trägt, er kann jedoch auch an ein Kohlenstoffatom gebunden sein, das zwischen den Kohlenstoffatomen liegt, die die beiden Hydroxylfunktionen aufweisen. Der Substituent enthält vorzugsweise 16 bis 22 Kohlenstoffatome.

Es ist weiterhin nicht unbedingt erforderlich, daß die aliphatische Kette des Glykols, über welche die beiden Hydroxyl gruppen miteinander verbunden sind, nur Kohlenstoffatome enthält; so kann auch ein Kohlenstoffatom durch ein Heteroatom wie Sauerstoff oder Stickstoff ersetzt sein. Ist das Heteroatom, das in der aliphatischen Kette liegt, Stickstoff, so kann der aliphatische Substituent mit mindestens 10, vorzugsweise 16 Kohlenstoffatomen auch direkt an das Heteroatom gebunden sein.

Der aliphatische Substituent an der Dihydroxylverbindung muß mindestens 10, vorzugsweise mindestens 16 Kohlenstoffatome aufweisen. Es ist nicht unbedingt erforderlich, daß der Substituent lediglich ein entsprechender Kohlenstoffrest ist. Als aliphatischer Substituent im Sinne dieser Erfindung gilt auch die Gruppe RCOO-, wobei R ein aliphatischer Rest mit mindestens 9, vorzugsweise mindestens 15 Kohlenstoffatomen bedeutet. Besonders geeignet sind Glycerinmonofettsäureester und Trimethylolpropanmonofettsäureester, beispielsweise Glycerinmonostearat, Glycerinmonobehensäureester und Trimethylolpropanmonostearat. Als weitere Dihydroxylverbindungen, die einen Substituenten mit der entsprechenden Kohlenstoffzahl aufweisen, haben sich 1,2-Dihydroxyoctadecan und 1,4-Dihydroxyoctadecan im Rahmen der Erfindung als sehr geeignet erwiesen.

Befindet sich ein Heteroatom in der aliphatischen Kette, so ist Voraussetzung für das erfindungsgemäße Verfahren, daß bei der Umsetzung der Dihydroxyverbindung mit Polyisocyanaten an dem Heteroatom kein Rest vorhanden ist, der mit Isocyanatgruppen reagieren kann, d.h. daß, wenn z.B. Stickstoff in der Kette liegt, die dritte Valenz durch einen Rest ohne aktive Wasserstoffatome substituiert sein muß. Dabei kann die Substitution so vorgenommen werden, daß eine weitere Aminbindung entsteht. Verbindungen dieser Art sind N,N-Bis (hydroxyalkyl)alkylamine, von denen das N-Stearyldiäthanolamin bevorzugt wird. Mann kann auch eine Amidbindung erzeugen und erhält dann N,N-Bis(hydroxyalkyl)säureamide.

Besonders geeignet im Rahmen der Erfindung ist das N,N-Bis(ß-hydroxyäthyl)stearylamid.

Die Umsetzung der substituierten monomeren aliphatischen Dihydroxylverbindung mit einem Polyisocyanat wird am besten in einem wasserfreien Lösungsmittel, vorzugsweise in Aceton, durchgeführt. Als Reaktionsmedium sind weitere Lösungsmittel, die gegenüber Isocyanatgruppen inert sind bzw. verglichen mit den Reaktionskomponenten, nur eine geringfügige Reaktivität aufweisen, geeignet. Es seien in diesem Zusammenhang genannt: Tetrahydrofuran, Dimethylformamid, Chloroform, Perchloräthylen, Methylenchlorid, Methyläthylketon, Äthylacetat, Dimethylsulfoxyd.

Die Umsetzung der aliphatischen substituierten Dihydroxylverbindung mit dem Polyisocyanat kann jedoch auch ohne Lösungsmittel in der Schmelze durchgeführt werden.

Für die Umsetzung der Dihydroxylverbindung mit dem Polyisocyanat können Katalysatoren verwendet werden. Als Katalysator hat sich u.a. Diacetoxydibutylzinn als besonders günstig erwiesen. Weitere Katalysatoren sind: Dibutylzinndilaurat, Kobaltnaphthenat, Zinkoctoat sowie tertiäre Amine beispielsweise Triäthylamin oder 1,4-Diaza [2,2,2] -bicyclooctan.

Die Polyisocyanate, die zum Aufbau des Voradduks verwendet werden, können sowohl aliphatischer als auch aromatischer Natur sein. Auch gemischt aliphatisch/aromatische Verbindungen sind geeignet. Es können Diisocyanate, Triisocyanate oder mehrfunktionelle Isocyanate bzw. Gemische derselben genommen werden. Vorzugsweise werden Diisocyanate verwendet. Besonders bewährt haben sich Toluylendiisocyanat, Diphenylmethan-4,4'-diisocyanat und Hexymethylendiisocyanat. Auch können sogenannte verkappte Diisocyanate verwendet werden, wie beispielsweise das Reaktionsprodukt von Diphenylmethan-4,4'-diisocyanat mit 2 Mol Phenol.

Die Polyätherverbindungen können bereits bei der Herstellung des Voradduks mitverwendet werden. Vorteilhafterweise werden die Polyätherverbindungen jedoch bei der anschließend durchgeführten Kettenverlängerung mitverwendet.

Das Verhältnis der Reaktionspartner, nämlich das molare Verhältnis von Dihydroxylverbindung zu Polyisocyanat kann in einem verhältnismäßig weiten Bereich variiert werden. So ist es möglich z.B. mit einem molaren Verhältnis von Dihydroxylverbindung zu Diisocyanat von 1 : 1,1 bis 1 : 3 zu arbeiten. Besonders geeignet ist der molare Bereich von etwa 1 : 1,5 bis 1 : 2,5, man kann dabei das Verhältnis von genau 1 : 2 einstellen, in vielen Fällen ist jedoch günstig, einen etwas höheren Wert für das Diisocyanat zu wählen und mit Verhältnissen von etwa 1 : 2,1 bis 1 : 2,3 zu arbeiten.

Bei einer Mitverwendung der Polyätherverbindung bereits bei der Herstellung des Voraddukts ist dafür Sorge zu tragen, daß genügend NCO-Gruppen für die anschließende Kettenverlängerung zur Verfügung stehen.

Das erhaltene Voraddukt läßt man sodann mit einem aliphatischen Diol reagieren, das eine zur Salzbildung befähigte Säuregruppe trägt. Diese Reaktion wird als Kettenverlängerung bezeichnet. Als Säuregruppe im Rahmen der Erfindung sind Gruppierungen zu verstehen: wie ($-SO_2OH$, $-COOH$) usw. Bei dieser Kettenverlängerung entsteht ein Polyurethan, in dem die oben angegebenen Gruppen vorhanden sind. Diese werden sodann durch Umsetzung mit einer Base wie z.B. Natronlauge oder Triäthylamin neutralisiert. Dabei wird das Polyurethan in ein Salz übergeführt. Das Polyurethanmolekül liegt als Anion vor.

Es ist jedoch auch möglich, die Kettenverlängerung mit einer aliphatischen Dihydroxylverbindung vorzunehmen, die bereits als ein entsprechendes Salz vorliegt. Das heißt, man nimmt Kettenverlängerer, bei denen die Säuregruppe wie beispielsweise die Carboxylgruppe bereits ganz oder teilweise neutralisiert wurde.

Als Kettenverlängerer sind besonders geeignet 2,2-Bis (hydroxymethyl)-propionsäure, Trimethylolpropanmonobernsteinsäureester, Trimethyloläthanmonobernsteinsäureester und ähnliche Verbindungen. Bei der Kettenverlängerung kann das Diol in annähernd äquivalenten Mengen bezogen auf Voraddukt eingesetzt werden. Günstig ist jedoch auch einen leichten Überschuß von etwa 5 bis 10 Molprozent des Diols zu verwenden.

Die Mitverwendung der Polyätherverbindung kann auf verschiedene Weise durchgeführt werden. Es ist möglich, das aliphatische Diol, welches eine zur Salzbildung befähigte Säuregruppe oder eine Salzgruppe trägt, in Mischung mit den Polyätherverbindungen zur Kettenverlängerung einzusetzen.

Vorzugsweise werden jedoch das Diol und die Polyätherverbindung getrennt in zeitlichem Abstand zugegeben. Es ist besonders vorteilhaft, zunächst das aliphatische Diol mit der Säure bzw. Salzgruppe zuzusetzen und sodann, nachdem das Diol weitgehend reagiert hat, die Polyätherverbindung zuzusetzen.

In einer vorteilhaften Ausführungsform werden neben dem Diol, das eine zur Salzbildung befähigte Säuregruppe oder bereits eine Salzgruppe enthält, und der Polyätherverbindung ein Diol mitverwendet, welches tertiären Stickstoff enthält. Dadurch wird in das Polyurethan eine weitere Gruppe eingebaut, die kationischen Charakter hat. Im Rahmen der Erfindung wird dieses Diol mit tertiärem Stickstoff in einer Menge mitverwendet, daß das molare Verhältnis Diol mit tertiärem Stickstoff zu Diol mit Säuregruppe bzw. bereits neutralisierter Säuregruppe maximal 1 : 1 beträgt. Bei dem Verhältnis 1 : 1 hat das Polyurethan amphoteren Charakter, daß heißt, anionische Gruppen und kationische Gruppen im Polyurethan sind in gleicher Menge vorhanden. Zweckmäßigerweise beträgt bei dieser Ausführungsform das molare Verhältnis kationischer Gruppe zu anionischen Gruppe mindestens 0,1 : 1.

Als Diole, welche tertiären Stickstoff enthalten, können Verbindungen wie das bevorzugte N-Methyldiäthanolamin verwendet werden. Zu nennen sind aber auch Verbindungen wie N-n-Butyldiäthanolamin, N-t-Butyldiäthanolamin, N-Methyldipropanolamin, N,N-Bis-(2-hydroxyäthyl)-p-toluidin u.dgl.

Es ist zweckmäßig, bei der Kettenverlängerung zunächst das Diol mit der Säuregruppe, sodann das Diol mit der tertiären Aminogruppe und zum Schluß die Polyätherverbindung zuzusetzen.

Nach Beendigung der Kettenverlängerung wird, sofern nicht bereits ein Salz zur Kettenverlängerung eingesetzt wurde, die Säuregruppe des Kettenverlängerers durch Zusatz einer Base, z.B. Triäthylamin neutralisiert. Das Neutralisieren kann auch durch andere Basen wie z.B. Natronlauge, Kalilauge oder sonstige Amine geschehen.

Das organische Lösungsmittel kann durch Abdampfen z.B. in einem Rotationsverdampfer entfernt werden, so daß man ein trockenes Polyurethan erhält, das in Form von Pulver versandt werden kann.

Es ist aber auch möglich, zu der organischen Lösung Wasser hinzuzugeben und das organische Lösungsmittel, wenn es einen niedrigeren Siedepunkt als Wasser aufweist, durch Vakuumdestillation zu entfernen. Dies ist besonders günstig bei Einsatz von Aceton.

Unter mindestens eine OH-Gruppe aufweisende Polyätherverbindung im Rahmen der Erfindung sind Verbindungen zu verstehen wie Additionsprodukte von Alkylenoxiden, insbesondere Äthylenoxiden an Alkohole, Polyalkylenglykole wie Polyäthylenglykol, Polypropylenglykol, Polytetramethylenglykol u.dgl., ferner Polyäthercarbonate, wie sie aus der Reaktion von Phosgen und Polyalkylenglykolen entstehen sowie andere Polyätherester, z.B. von Polyalkylenglykolen und Adipinsäure. Wichtig ist, daß die Polyätherverbindung mindestens eine OH-Gruppe, vorzugsweise eine endständige OH-Gruppe aufweist, damit die Polyätherverbindung mit einer der vorhandenen NCO-Gruppen reagieren kann und somit in das Polyurethanmolekül eingebaut wird.

Die Menge der mitverwendeten und somit in das Polyurethan eingebauten Polyätherverbindung kann in verhältnismäßig weiten Grenzen variiert werden. Zweckmäßig wird eine solche Menge der Polyätherverbindung verwendet, das mindestens 5 Gew.-% Polyäthergruppen im Anion vorhanden sind. Es ist möglich, den Anteil des Polyäthers im Polyurethan bis etwa 60 Gew.% zu steigern.

Die bei der Herstellung erhaltenen wäßrigen Dispersionen bzw. Lösungen lassen sich direkt zum Leimen einsetzen. Es war besonders überraschend, daß die erhaltenen Dispersionen bzw. Lösungen sehr stabil sind, somit lange lagerfähig sind. Das Leimungsmittel weist bereits in geringen Konzentrationen eine außerordentlich gute Wirksamkeit auf. Bereits Konzentrationen von 0,2 % führen zu hohen Leimungswerten und niedrigen Cobb-Werten.

Es war besonders überraschend, daß die erfindungsgemäß hergestellten anionischen Polyurethane auch eine Leimung in hartem Wasser zulassen. So können die Leimungen ohne weiteres in Wasser mit einem hohen Härtegrad durchgeführt werden. So werden selbst bei Wasser mit einem Härtegrad von 50° deutscher Härte keine Ausfällungen beobachtet.

Ein weiterer überraschender Vorteil, welchen die Erfindung bringt ist die Tatsache, daß die erfindungsgemäß hergestellten anionischen Polyurethane sich ohne Probleme bei der Leimung in saurem Milieu einsetzen lassen. Es kommt nicht zu Ausfällungen, so daß sowohl bei der Masseleimung als auch bei der Oberflächenleimung hohe Leimungsgrade erreicht werden und zufriedenstellende Cobb-Werte.

Es war ferner besonders überraschend, daß sich die erfindungsgemäß hergestellten Polyurethane auch beim Streichen von Papier zusammen mit Latex einsetzen lassen. Man kann mit ihnen auf diese Weise Papiere herstellen, die einen besonders feinen Überzug aufweisen und vielfach als low-weight-coated-papers bezeichnet werden.

Die Erfindung wird durch folgende Beispiele näher erläutert:

Beispiele zur erfindungsgemäßen Herstellung der Polyurethane.

Beispiel 1

Als Apparatur dient ein beheizbarer 500 ml fassender Dreihalsrundkolben, der mit Rührer, Rückflußkühler mit trockenrohr sowie Tropftrichter versehen ist.

17,9 g Glycerinmonostearat handelsüblicher Qualität (0.05 Mol) werden zusammen mit 50 g wasserfreiem Aceton im Kolben vorgelegt. Hierzu gibt man 17,9 g (0.1028 Mol) eines Gemisches aus Toluylendiisocyanat-(2.4) und-(2.6) (80:20) und 11 mg Dibutylzinndiacetat. Das Reaktionsgemisch wird 30 Min. zum Sieden erhitzt.

Danach fügt man nacheinander 4.64 g (0.0346 Mol) Dimethylolpropionsäure; 1,03 g (0.00865 Mol) N-Methyldiethanolamin; 13,5 g (0.00675 Mol) Polyethylenglykol mit einem mittleren Molekulargewicht von 2000 und 25 g wasserfreies Aceton hinzu und erhitzt das Reaktionsgemisch zum Sieden.

Nach 60 Min. Reaktionszeit ist eine mäßig viskose Lösung des Polyurethans entstanden.

Zur Salzbildung fügt man unter Rühren zunächst 26 ml 1 N Natronlauge und dann 315 ml destilliertes Wasser innerhalb von 10 Min. hinzu.

Nach Abzug des Acetons durch Vakuumdestillation erhält man eine ca. 15%ige klare Lösung des Polyurethanionomeren.

Beispiel 2

17,9 g (0.05 Mol) Glycerinmonostearat handelsüblicher Qualität werden zusammen mit 50 g wasserfreiem Aceton vorgelegt. Hierzu gibt man 17,9 g (0.1028 Mol) eines Gemisches aus Toluylendiisocyanat-(2.4) und -(2.6) (80:20) und 11 mg Dibutylzinndiacetat. Das Reaktionsgemisch wird 30 Min. zum Sieden erhitzt. Danach fügt man nacheinander 4,02 g (0.0300 Mol) Dimethylolpropionsäure; 1,57 g (0.0132 Mol) N-Methyldiethanolamin; 13,5 (0.00675 Mol) Polyethylenglykol mit einem mittleren Molekulargewicht von 2000 und 25 g wasserfreies Aceton hinzu und erhitzt das Reaktionsgemisch zum Sieden.

Nach 60 Min. Reaktionszeit ist eine mäßig viskose Lösung entstanden. Zur Salzbildung fügt man unter Rühren zunächst 17 ml 1 N NaOH und dann 315 ml destilliertes Wasser innerhalb von 10 Min. hinzu.

Nach Abzug des Acetons durch Vakuumdestillation erhält man eine ca. 15%ige opake Lösung des Polyurethanionomeren.

Beispiel 3

14,32 g (0.04 Mol) Glycerinmonostearat handelsüblicher Qualität werden zusammen mit 50 g wasserfreiem Aceton vorgelegt. Hierzu gibt man 20 g Polyethylenglykol mit einem mittleren Molekulargewicht von 2000 (0.01 Mol) und 17,9 g (0.1028 Mol) eines Gemisches aus Toluylendiisocyanat (2.4) und (2.6) (80:20) und 11 mg Dibutylzinndiacetat. Das Reaktionsgemisch wird 30 Min. zum Sieden erhitzt.

Danach fügt man nacheinander 6,03 (0.045 Mol) Dimethylolpropionsäure; 0.60 g (0.005 Mol) N-Methyldiethanolamin und 25 g wasserfreies Aceton hinzu und erhitzt das Reaktionsgemisch zum Sieden.

Nach 60 Min. Reaktionszeit ist eine mäßig viskose Lösung entstanden. Zur Salzbildung fügt man unter Rühren zunächst 40 ml 1 N Natronlauge und danach 330 ml destilliertes Wasser innerhalb von 10 Min. hinzu. Nach Abzug des Acetons durch Vakuumdestillation erhält man eine ca. 15 %ige opake Lösung des Polyurethanionomeren.

Beispiel 4

Verfahren gemäß Beispiel 1, jedoch wird anstelle von Polyethylenglycol Polypropylenglycol mit einem mittleren Molekulargewicht von 2000 eingesetzt. Es entsteht dabei eine opake Lösung.

Beispiel 5 -Vergleichsbeispiel

Dieses Beispiel entspricht Beispiel 1 aus der DE-PS 2 457 972.

Leimungsgrad und Cobb-Wert wurden bestimmt, wie in DE-PS 2 457 972 angegeben.

Beispiel 6

Ein ungeleimtes Rohpapier (33 Teile Nadelholzsulfatzellstoff, 67 Teile Laubholzsulfitzellstoff, 13 Teile Calciumcarbonat) mit einem Flächengewicht von 80 g/m² wird in der Leimpresse mit einer Leimflotte behandelt, die 5 % enzymatisch abgebauter Stärke, 0,065 % $CaCl_2$ und 0,2 % atro Leimungsmittel, hergestellt nach Beispiel 1, enthält. Das Papier nimmt in der Leimpresse 3,39 % Trockensubstanz, bezogen auf das Papiergewicht, auf.

Zum Vergleich wird unter sonst gleichen Bedingungen die Leimung unter Verwendung anionischen Leimungsmittels, hergestellt nach Beispiel 5 (Patent 2 457 972), durchgeführt. Die am Papier gemessenen Werte sind in Tabelle 1 aufgeführt:

## Tabelle 1

| | PU Dispersion nach Beispiel 5 | PU Dispersion nach Beispiel 1 |
|---|---|---|
| Leimungsgrad (Hercules-sec) | keine Leimung | 615 |
| Cobb-Wert (Wasser) 1 Minute | Ausfällungen von PU | 22 |

Beispiel 7

Unter sonst gleichen Bedingungen wie in Beispiel 6 wird eine Oberflächenleimung durchgeführt mit dem Unterschied, daß der pH der Leimflotte mit 1 N HCl oder 1N NaOH auf verschiedene Werte eingestellt wird. Die am Papier gemessenen Eigenschaften sind in Tabelle 2 zusammengestellt:

Tabelle 2

|  | PU Dispersion nach Beispiel 5 | PU Dispersion nach Beispiel 1 | | |
|---|---|---|---|---|
| pH | 9 ./. 4 | 7.4 | 6.6 | 4.8 |
| Leimungsgrad (Hercules-sec) | keine Leimung | 648 | 478 | 642 |
| Cobb-Wert (Wasser) 1 Minute | Ausfällung von PU | 22 | 21 | 22 |

Beispiel 8

Unter sonst gleichen Bedingungen wie in Beispiel 6 wird eine Oberflächenleimung durchgeführt mit dem Unterschied, daß die Leimflotte zusätzlich 0,01 % Al $Cl_3$ enthält. Die am Papier gemessenen Eigenschaften sind in Tabelle 3 zusammengestellt.

Tabelle 3

|  | PU Dispersion nach Beispiel 5 | PU Dispersion nach Beispiel 1 |
|---|---|---|
| Leimungsgrad (Hercules-sec) | keine Leimung | 660 |
| Cobb-Wert (Wasser) 1 Minute | Ausfällung in der Leimflotte | 22 |

Beispiel 9

Ein ungeleimtes Rohpapier (sogenannte Linerqualität) mit einem Flächengewicht von 157 g/m² wird in der Leimpresse mit einer Leimflotte behandelt, die 5 % oxidativ abgebauter Stärke, 0,3 % atro Leimungsmittel, hergestellt nach Beispiel 1 enthält. Das Papier nimmt in der Leimpresse 1,49 % Trockensubstanz, bezogen auf das Papiergewicht auf.

Unter sonst gleichen Bedingungen wird ein Vergleichsversuch eines Leimungsmittels gemäß Beispiel 6 durchgeführt. Die am Papier gemessenen Werte sind in Tabelle 4 aufgeführt.

## Tabelle 4

| | PU Dispersion gemäß Beispiel 5 | PU Dispersion gemäß Beispiel 1 |
|---|---|---|
| Cobb-Wert (Wasser) 1 Minute | 150 | 24 |

Beispiel 10

Ein ungeleimtes Rohpapier (50 % Altpapier, nämlich 25 % Illustrierten, 25 % Tageszeitung, 50 % Kiefernsulfat) mit einem Flächengewicht von 120 g/m² wird in der Leimpresse mit einer Leimflotte behandelt, die 5 % oxidativ abgebauter Stärke und 0,4 % atro Leimungsmittel, hergestellt nach Beispiel 1, enthält. Das Papier nimmt in der Leimpresse 1,4 % Trockensubstanz, bezogen auf das Papiergewicht auf.

Zum Vergleich wird unter sonst gleichen Bedingungen die Oberflächenleimung unter Verwendung des anionischen Leimungsmittels gemäß Beispiel 5 durchgeführt. Die am Papier gemessenen Eigenschaften sind in Tabelle 5 zusammengestellt.

## Tabelle 5

| | PU Dispersion gemäß Beispiel 5 | PU Dispersion gemäß Beispiel 1 |
|---|---|---|
| Cobb-Wert (Wasser) 1 Minute | 125 | 24 |

Beispiel 11

Unter sonst gleichen Bedingungen wie in Beispiel 6 wird eine Oberflächenleimung durchgeführt mit dem Unterschied, daß eine Polyurethandispersion, hergestellt nach Beispiel 2, eingesetzt wird. Die am Papier gemessenen Werte sind in Tabelle 6 aufgeführt.

Tabelle 6

| | PU Dispersion gemäß Beispiel 5 | PU-Dispersion gemäß Beispiel 2 |
|---|---|---|
| Leimungsgrad (Hercules-sec) | keine Leimung | 930 |
| Cobb-Wert (Wasser) 1 Minute | Ausfällungen | 20 |

**Ansprüche**

1. Verfahren zur Herstellung von anionischen Polyurethanen durch Umsetzung einer aliphatischen Dihydroxyverbindung, die einen aliphatischen Substituenten mit mindestens 10 Kohlenstoffatomen aufweist, mit einem Polyisocyanat zu einem NCO-Endgruppen aufweisenden Voraddukt, Kettenverlängerung des erhaltenen Voraddukts mit einem aliphatischen Diol, das eine zur Salzbildung befähigte Säuregruppe trägt und völlige oder teilweise Überführung der Säuregruppe durch Umsetzung mit einer Base in ein Salz oder durch Kettenverlängerung des Voraddukts mit einem entsprechenden aliphatischen Diol, das bereits eine entsprechende Salzgruppe trägt, dadurch gekennzeichnet, daß man zum Aufbau des anionischen Polyurethans eine mindestens eine OH-Gruppe aufweisende Polyätherverbindung mitverwendet.

2. Verfahren zur Herstellung von anionischen Polyurethanen durch Umsetzung einer aliphatischen Dihydroxyverbindung, die einen aliphatischen Substituenten mit mindestens 10 Kohlenstoffatomen aufweist, mit einem Polyisocyanat zu einem NCO-Endgruppen aufweisenden Voraddukt, Umsetzung des erhaltenen Voraddukts mit einer aliphatischen Trihydroxyverbindung in einem molaren Verhältnis von etwa 1 : 1 und weiterer Umsetzung mit einem cyclischen Anhydrid einer Dicarbonsäure und anschließender ganzer oder teilweiser Überführung der dabei entstandenen Säuregruppe durch Umsetzung mit einer Base in ein Salz, dadurch gekennzeichnet, daß man zum Aufbau des anionischen Polyurethans eine mindestens eine OH-Gruppe aufweisende Polyätherverbindung mitverwendet.

3. Verfahren nach einem der Ansprüche 1 bis 2, dadurch gekennzeichnet, daß man eine Polyätherverbindung mit zwei endständigen OH-Gruppen mitverwendet.

4. Verfahren nach Anspruch 3, dadurch gekennzeichnet, daß man als Polyätherverbindung Polyalkylenglykole verwendet.

5. Verfahren nach Anspruch 4, dadurch gekennzeichnet, daß man als Polyalkylenglykol Polyäthylenglykol verwendet.

6. Verfahren nach einem der Ansprüche 1 bis 5, dadurch gekennzeichnet, daß man 5 bis 50 Gew.-% der Polyätherverbindung mitverwendet.

7. Verfahren nach Anspruch 6, dadurch gekennzeichnet, daß man 20 bis 30 Gew.-% verwendet.

8. Verfahren nach einem der Ansprüche 1 bis 7, dadurch gekennzeichnet, daß man Polyalkylenglykole mit einem Molekulargewicht von 200 bis 6 000 verwendet.

9. Verfahren nach Anspruch 8, dadurch gekennzeichnet, daß man Polyalkylenglykole mit einem Molekulargewicht von 1000 bis 3 000 verwendet.

10. Verfahren nach einem der Ansprüche 1 bis 9, dadurch gekennzeichnet, daß man Polyalkylenglykole zur Reaktion mit dem Voraddukt mitverwendet.

11. Verfahren nach einem der Ansprüche 1 bis 10, dadurch gekennzeichnet, daß man die Umsetzung in einem Lösungsmittel durchführt.

12. Verfahren nach einem der Ansprüche 1 oder 3 bis 11, dadurch gekennzeichnet, daß man zur Kettenverlängerung neben dem aliphatischem Diol, welches eine zur Salzbildung befähigte Säuregruppe bzw. bereits eine entsprechende Salzgruppe trägt, ein weiteres aliphatisches Diol, das tertiären Stickstoff enthält, mitverwendet, wobei das molare Verhältnis aliphatisches Diol mit tertiärem Stickstoff zu aliphatischem Diol mit Säure-bzw. Salzgruppe maximal 1 : 1 ist.

13. Verfahren nach Anspruch 12, dadurch gekennzeichnet, daß man N-Methyldiäthanolamin verwendet.

14. Anionische Polyurethane erhalten nach einem Verfahren gemäß einem der Ansprüche 1 bis 13.

15. Verwendung der anionischen Polyurethane gemäß Anspruch 14 als Leimungsmittel für Papier.